(19) Europäisches Patentamt
European Patent Office
Office européen des brevets

(11) **EP 1 078 376 B1**

(12) **EUROPEAN PATENT SPECIFICATION**

(45) Date of publication and mention
of the grant of the patent:
**07.11.2007   Bulletin 2007/45**

(51) Int Cl.:
**G21C 15/18** *(2006.01)*        **G21C 15/26** *(2006.01)*
**G21C 15/28** *(2006.01)*

(21) Application number: **99921139.4**

(22) Date of filing: **12.05.1999**

(86) International application number:
**PCT/IT1999/000130**

(87) International publication number:
**WO 1999/059160 (18.11.1999 Gazette 1999/46)**

(54) **COOLING SYSTEM FOR A NUCLEAR REACTOR**

KÜHLSYSTEM FÜR EINEN KERNREAKTOR

SYSTEME DE REFROIDISSEMENT POUR REACTEUR NUCLEAIRE

(84) Designated Contracting States:
**BE DE ES FR IT**

(30) Priority: **12.05.1998  IT  TO980400**

(43) Date of publication of application:
**28.02.2001   Bulletin 2001/09**

(73) Proprietor: **Ansaldo Nucleare S.p.A.**
**16152 Genova (IT)**

(72) Inventor: **CINOTTI, Luciano**
**I-16036 Recco (IT)**

(74) Representative: **Eccetto, Mauro et al**
**Studio Torta S.r.l.,**
**Via Viotti, 9**
**10121 Torino (IT)**

(56) References cited:
**EP-A- 0 047 698         US-A- 4 115 192**
**US-A- 4 560 533         US-A- 5 263 070**

## Description

TECHNICAL FIELD

The present invention relates to a perfected cooling system for a nuclear reactor, and which is especially suitable for use in liquid-metal or molten-salt nuclear reactors.

BACKGROUND ART

As is known, the energy produced by the controlled nuclear fission reaction in the core of a nuclear reactor is removed by a primary coolant circulating, inside the reactor vessel, between the core and one or more heat exchangers in which a secondary coolant is circulated to draw and transfer heat from the primary coolant to a conversion unit, e.g. a steam generator for powering a turbine; and a further cooling circuit, independent of the one for obtaining useful work, is normally provided to remove residual heat, for obvious safety reasons. Nuclear reactors are known in which the primary coolant comprises a liquid metal (e.g. sodium, lead or lead-bismuth eutectic) or a molten salt.

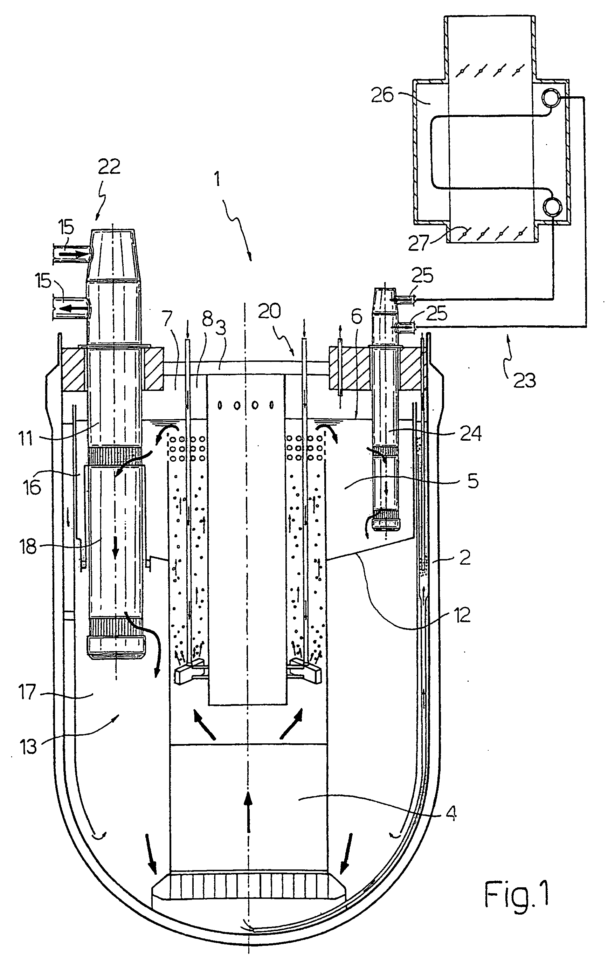

Nuclear reactors of this type are known from EP-A-0047698. Another know solution, for example, is shown in Figure 1, in which a nuclear reactor 1 - in particular, using a liquid metal (e.g. sodium) or molten salt as primary coolant - comprises a vessel 2, e.g. a double-walled vessel, closed at the top by a cover 3 and housing at the bottom a core 4 in turn housing a number of nuclear fuel elements. Vessel 2 contains a predetermined quantity of a primary coolant 5 up to a free surface 6; and a predetermined quantity of an inert gas 7 in a chamber B located over the free surface 6 of primary coolant 5 and beneath cover 3. Nuclear reactor 1 also comprises at least one main heat exchanger 11; and a conducting structure 12 defining inside vessel 2 a primary cooling circuit 13 for cooling the primary coolant S between core 4 and main heat exchanger 11, in which a secondary coolant - indicated by arrows 15 in Figure 1 - draws heat from primary coolant 5. More specifically, conducting structure 12 defines a top or "hot" Manifold 16 (by containing relatively high-temperature primary coolant 5 from core 4), and a bottom or "cold" manifold 17 (by containing primary coolant 5 from which heat has been yielded to secondary coolant 15 in main heat exchanger 11); and main heat exchanger 11 defines a fluid dynamic connecting conduit 18 between the top and bottom manifolds.

Primary coolant 5 is kept moving between core 4 and main heat exchanger 11 by natural circulation assisted by an auxiliary-circulation device 20 for injecting a carrier gas according to a known solution described in detail in Italian Patent Application n. TO96A001081 filed by the present Applicant.

Finally, nuclear reactor 1 comprises a secondary cooling circuit 22 (not shown in detail) in which secondary coolant circulates to draw heat from primary coolant 5 circulating in primary cooling circuit 13 inside vessel 2 of nuclear reactor 1; and an auxiliary cooling circuit 23 for removing residual heat, and which intervenes in the event the secondary coolant 15 in main heat exchanger 11 fails to remove all the heat generated in the nuclear reaction (i.e. to prevent core 4 from overheating). More specifically, an auxiliary heat exchanger 24 is immersed in top manifold 16 and transfers heat, by means of a further auxiliary coolant indicated by arrows 25 in Figure 1, to an external heat exchanger 26 - e.g. a unit heater exchanger with U-shaped finned pipes between two manifolds - by which the heat is yielded to the atmosphere. Auxiliary cooling circuit 23 is operated by opening gate valves 27 - either manually or by means of an automatic actuating system - to permit the passage of air over the pipes.

Nuclear reactors of this type are known to use water under pressure as secondary coolant 15. However, the high temperature of primary coolant 5 calls for extremely high pressure of the cooling water, thus resulting in possible damage, especially of main heat exchanger 11, and the need to provide suitable safety systems to prevent pressurizing the primary cooling circuit 13 inside nuclear reactor 1 itself. Another danger lies in primary coolant 5 ceasing to circulate through core 4 by solidifying in main heat exchanger 11 and so clogging fluid dynamic connecting conduit 18, which is the only passage between top and bottom manifolds 16 and 17.

To eliminate the above drawbacks, it has been proposed to use the same fluid for both primary coolant 5 and secondary coolant 15; which solution would eliminate the risk of primary coolant 5 ceasing to circulate through core 4. In the event of a malfunction, in fact, the first to solidify would be secondary coolant 15 (at a lower temperature than primary coolant 5), which would therefore cease to withdraw heat from, and so prevent solidification of, primary coolant 5. Moreover, such a solution would not call for excessively high overpressures of the secondary coolant 15 circuits, thus reducing the risk of damage to the circuits.

On the other hand, in the case of liquid-metal or molten-salt nuclear reactors, using the same fluid for the secondary coolant as for the primary would lead to a whole series of technical problems associated with the use of such fluids. More specifically, in the case of molten salts or heavy metals (such as lead or a lead-bismuth eutectic), the circuitry required would be extremely heavy, bulky and, hence, expensive, on account of the low speed at which the' fluid must be maintained to reduce corrosion and abrasion. Sodium, on the other hand, being incompatible with air and water, would call for numerous precautionary measures, which would also reflect significantly on the cost of the system.

Similar problems, obviously, also exist as regards the auxiliary cooling circuits for removing residual heat, in the event the same fluid as for the primary coolant is substituted for water under pressure. Moreover, auxiliary cooling circuits of the type described previously call for an actuating system activated in response to particular emergency conditions (and which in turn is subject to malfunctioning).

## DISCLOSURE OF INVENTION

It is an object of the present invention to provide a cooling system for a nuclear reactor, in particular a liquid-metal or molten-salt nuclear reactor, designed to eliminate the aforementioned drawbacks typically associated with known systems, and which is therefore safe, reliable and, at the same time, relatively cheap and easy to produce.

According to the present invention, there is provided a nuclear reactor, in particular a liquid-metal- or molten-salt-cooled nuclear reactor, with a cooling system, as claimed in claim 1.

By virtue of the particular solutions proposed by the invention, using as a secondary coolant a fluid with the characteristics of the invention (e.g. a synthetic oil) - which would otherwise be extremely difficult to implement in nuclear reactors - provides for obtaining in a relatively straightforward, low-cost manner a cooling system involving none of the aforementioned drawbacks of known cooling systems, and which at the same time is safe and reliable. That is, simply using synthetic oil as a primary coolant would not eliminate the risk of the primary coolant ceasing to circulate in the core (by, in itself, not excluding the possibility of the primary coolant solidifying in the main heat exchangers), or the possibility of the oil, in the event of damage to the main heat exchangers or connecting piping, being carried by the primary coolant to the core, thus increasing reactivity and possibly resulting in an uncontrolled increase in the power of the reactor.

According to the invention, on the other hand, the fluid dynamic connecting means in parallel with the main heat exchanger ensure circulation of the primary coolant in the core, even in the event of the primary coolant solidifying in the main heat exchanger. Moreover, maintaining the circulation speed of the primary coolant at a value below or equal to the float-up speed of the secondary coolant ensures against portions of secondary coolant accidentally released in the reactor being carried to the core by the primary coolant, thus preventing the possibility of an uncontrolled increase in reactivity or the power of the reactor.

## BRIEF DESCRIPTION OF DRAWINGS

A number of non-limiting embodiments of the present invention will be described by way of example with reference to the accompanying drawings, in which:

Figure 1 shows a schematic longitudinal section of a known nuclear reactor;
Figure 2 shows a schematic longitudinal section of a nuclear reactor featuring a cooling system in accordance with the present invention;
Figure 3 shows a schematic longitudinal section of a heat exchanger usable in the cooling system according to the invention;
Figures 4, 5, 6 show schematic longitudinal sections of respective larger-scale details of the Figure 3 heat exchanger;
Figure 7 shows a cross section of a further larger-scale detail of the Figure 3 heat exchanger;
Figure 8 shows, schematically, a step in the maintenance of the Figure 3 heat exchanger.

## BEST MODE FOR CARRYING OUT THE INVENTION

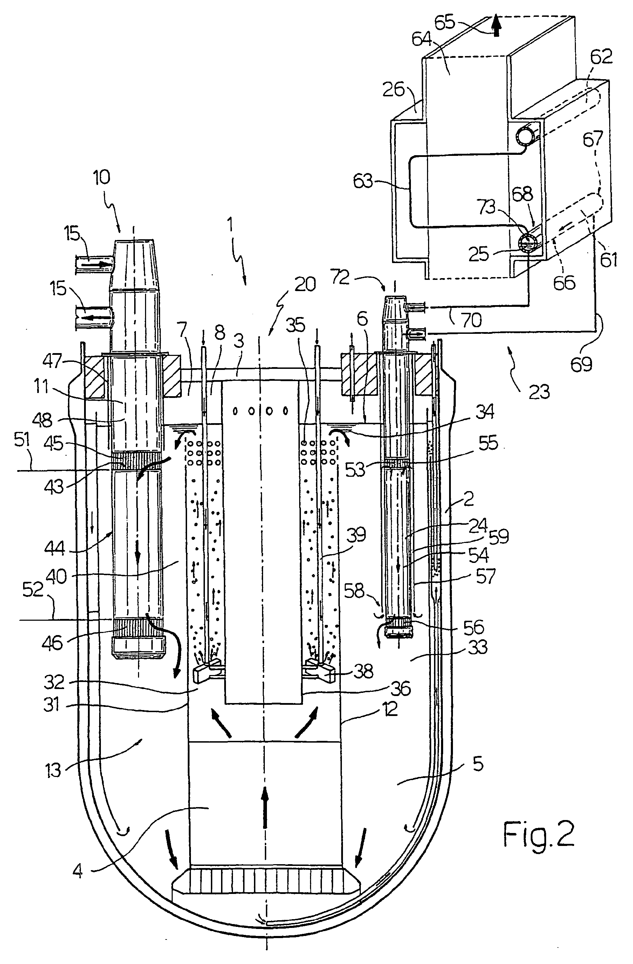

With reference to Figure 2 (in which any details similar or identical to those in Figure 1 are indicated using the same reference numbers), a nuclear reactor 1 comprises a vessel, e.g. a double-walled vessel, 2 closed at the top by a cover 3 and housing at the bottom a core 4 in turn housing, in known manner, a number of nuclear fuel elements (not shown for the sake of simplicity). Vessel 2 contains a predetermined quantity of a primary coolant 5 - in the example shown, liquid metal (e.g. a lead-bismuth eutectic) - up to a free surface 6, and a predetermined quantity of an inert gas 7 inside a chamber 8 located over level 6 of coolant 5 and beneath cover 3.

Nuclear reactor 1 comprises a cooling system indicated as a whole by 10 in Figure 2 and in turn comprising at least one main heat exchanger 11 for withdrawing heat from coolant 5, and a conducting structure 12 defining, inside vessel 2, a primary cooling circuit 13 for cooling primary coolant 5 between core 4 and main heat exchanger 11, in which a secondary coolant - indicated by arrows 15 in Figure 2 - withdraws heat from primary coolant 5.

More specifically, conducting structure 12 comprises a substantially cylindrical enclosure 31 extending vertically from (and enclosing) core 4 up to a predetermined distance beneath free surface 6 of primary coolant 5; enclosure 31 defines internally an upflow conduit 32 for primary coolant 5 from core 4 to the top of nuclear reactor 1, and, together with vessel 2, defines a downflow conduit 33 for primary coolant 5 towards core 4; upflow conduit 32 and downflow conduit 33 communicate hydraulically by an annular passage 34 defined by the predetermined distance between enclosure 31 and free surface 6 of primary coolant 5, and by a number of holes 35 formed through the lateral wall of enclosure 31; and a further cylindrical element 36 (e.g. housing known nuclear reaction control means not shown) may be inserted inside enclosure 31.

According to the solution described in said Italian Patent Application n. TO96A001081, nuclear reactor 1 also comprises a carrier-gas auxiliary-circulation device 20 in turn comprising a number of diffusers 38 housed inside enclosure 31 and which, by means of respective conduits 39 and blowers (not shown for the sake of simplicity), are supplied with a stream of compressed gas, e.g. drawn from chamber 8, to lighten the column of primary coolant 5 traveling along upflow conduit 32 from core 4.

Main heat exchanger 11 is housed inside downflow conduit 33 to intercept the hot primary coolant 5 flowing along downflow conduit 33 back towards core 4. According to the invention, and unlike known solutions, main heat exchanger 11 is not the only fluid dynamic conduit connecting the top and bottom of nuclear reactor 1, in that cooling system 10 also comprises an auxiliary conduit 40 in parallel with main heat exchanger 11. In the non-limiting example shown in Figure 2, main heat exchanger 11 does not occupy the whole fluid dynamic passage section of downflow conduit 33 defined by enclosure 31 and vessel 2, so that auxiliary conduit 40 is defined by the portion of downflow conduit 33 not occupied by main heat exchanger 11. Obviously, as opposed to a single main heat exchanger 11, provision may be made for a number of heat exchangers spaced angularly inside downflow conduit 33.

Main heat exchanger 11 comprises a pipe bundle 43 housed inside a substantially cylindrical shell 44 having an upper inlet 45 and a lower outlet 46, both defined, for example, by radial openings formed through shell 44 at different levels. Main heat exchanger 11 is anchored to cover 3 of nuclear reactor 1, and extends downwards so that pipe bundle 43 is immersed entirely in primary coolant 5, i.e. entirely beneath free surface 6. A conducting sleeve 47 preferably surrounds, at a predetermined radial distance, a top portion 48 of main heat exchanger 11, and extends from cover 3 to upper inlet 45; a bottom edge of upper inlet 45 defines an inlet level 51 of primary coolant 5 into main heat exchanger 11; and a top edge of lower outlet 46 defines an outlet level 52 of primary coolant 5 from main heat exchanger 11.

According to the invention, secondary coolant 15 circulating in main heat exchanger 11 is a low-vapour-pressure fluid, e.g. a synthetic oil. In particular, use may be made of diathermic fluids having a low vapour pressure at least when maintained below a predetermined temperature roughly below 350-400°C. As explained later on, maintaining the system below said temperatures, it is therefore possible to limit pressurization of main heat exchanger 11 (and the relative circuits) to relatively low values.

According to the invention, the fluid dynamic passage section of primary cooling circuit 13 is so sized that the downflow speed of primary coolant 5 in the circuit is, in absolute value, less than the float-up speed which secondary coolant 15 would have if fed into primary coolant 5 moving at that downflow speed.

Cooling system 10 also comprises an auxiliary safety cooling circuit 23 for preventing - in abnormal conditions and in the event of reduced efficiency of main heat exchanger 11 - the residual heat produced by the nuclear fuel from resulting in an uncontrolled increase in temperature in nuclear reactor 1.

According to the invention, auxiliary cooling circuit 23 comprises an auxiliary, e.g. shell-and-pipe, heat exchanger 24 housed inside vessel 2 of nuclear reactor 1, in particular inside downflow conduit 33; and an external, e.g. unit heater, exchanger 26. An auxiliary coolant 25 circulates in auxiliary heat exchanger 24 to withdraw heat from primary coolant 5. Like main heat exchanger 11, auxiliary heat exchanger 24 also comprises a pipe bundle 53 housed inside a substantially cylindrical shell 54 having an upper inlet 55 and a lower outlet 56, both defined, for example, by radial openings formed through shell 54; and auxiliary heat exchanger 24 is also preferably anchored to cover 3 of nuclear reactor 1, and extends downwards so that pipe bundle 53 is completely immersed in primary coolant 5, below free surface 6. In the preferred embodiment shown in Figure 2, a conducting sleeve 57 surrounds and is located a predetermined radial distance from auxiliary heat exchanger 24, extends from cover 3 to lower outlet 56 of shell 54, and defines, with shell 54, an annular conduit 59. The bottom end 58 of conducting sleeve 57 - i.e. defining the inlet of annular conduit 59 - is located substantially on a level with outlet level 52 of primary coolant 5 from main heat exchanger 11, corresponding to the top edge of lower outlet 46 of main heat exchanger 11.

External heat exchanger 26 comprises a lower manifold 61; an upper manifold 62; and a bank of shaped heat-exchange pipes 63 connecting manifolds 61 and 62. In the non-limiting example shown in Figure 2, upper and lower manifolds 61, 62 are cylindrical and substantially horizontal and parallel to each other; shaped pipes 63 (only one of which is shown schematically in Figure 2) are substantially known U-shaped finned pipes having respective end fittings for connection to a top portion of lower manifold 61 and to a bottom portion of upper manifold 62; and the bank of shaped pipes 63 is housed in an open conduit 64 for the passage of a stream of atmospheric air (and possibly associated with a known stack not shown).

A bottom portion 66 of lower manifold 61 comprises, at respective opposite longitudinal ends 67, 68, a first and a second pipe 69, 70 for connection to auxiliary heat exchanger 24, e.g. to an end 72 of the auxiliary heat exchanger, located outside vessel 2 of nuclear reactor 1 and over cover 3.

According to the invention, auxiliary coolant 25 is also a low-vapour-pressure fluid, in particular the same (e.g. same synthetic oil) used as secondary coolant 15 in main heat exchanger 11.

The quantity of auxiliary coolant 25 in auxiliary cooling circuit 23 is such, under normal operating conditions of nuclear reactor 1, as to partly fill lower manifold 61 of external heat exchanger 26 up to a predetermined level 73, as shown in Figure 2; whereas upper manifold 62 and shaped pipes 63 of external heat exchanger 26 are filled with a noncondensable gas (e.g. nitrogen) at predetermined pressure. Above level 73 of auxiliary coolant 25, lower manifold 61 obviously contains vapour of, and at the partial pressure corresponding to the temperature of, auxiliary coolant 25 inside lower manifold 61.

Under normal operating conditions, primary coolant 5 circulates along primary cooling circuit 13 inside vessel 2 of nuclear reactor 1. As explained later on, the difference in weight between the column of (colder) primary coolant 5 inside and between the levels corresponding to upper inlet 45 and lower outlet 46 of main heat exchanger 11, and the column of (hotter) primary coolant 5 outside and between the same levels of main heat exchanger 11, ensures a natural draft to circulate the primary coolant through main heat exchanger 11 as opposed to auxiliary conduit 40.

More specifically, primary coolant 5 issuing from core 4, for example, at a temperature $T_1$, flows along upflow conduit 32 (inside enclosure 31), through annular passage 34 and holes 35 into downflow conduit 33 and down to upper inlet 45 of main heat exchanger 11, along main heat exchanger 11 inside shell 44 and over pipe bundle 43 to yield heat to secondary coolant 15 circulating in the main heat exchanger, then out through lower outlet 46, at a temperature $T_2$ lower than $T_1$, and back into core 4.

To fully exploit the heat generated in nuclear reactor 1, all the primary coolant 5 from core 4 must flow through main heat exchanger 11, and substantially none through auxiliary conduit 40 : in other words, the temperature of primary coolant 5 flowing into core 4 must be substantially equal to the outflow temperature $T_2$ from lower outlet 46 of main heat exchanger 11.

This is achieved, according to the invention, by appropriately sizing main heat exchanger 11. In particular, for a flow equal to the total flow of primary coolant 5 from core 4, the load losses of primary coolant 5 in main heat exchanger 11 are less than or equal to the draft corresponding to the difference in weight between the column of primary coolant 5 inside and between inlet level 51 and outlet level 52 of main heat exchanger 11, and a corresponding column of primary coolant 5 between the same levels at temperature $T_1$.

Primary coolant 5 is therefore at temperature $T_1$ (equal to the outflow temperature from core 4) above inlet level 51 into main heat exchanger 11, and at temperature $T_2$ (lower than temperature $T_1$ and equal to the inflow temperature into core 4) below outlet level 52 from main heat exchanger 11. Between inlet and outlet levels 51 and 52, primary coolant 5 is stratified at a temperature ranging between $T_1$ and $T_2$.

Primary coolant 5 is therefore also at temperature $T_2$ at the bottom end 58 of conducting sleeve 57, which, as stated, is substantially on a level with outlet level 52 from main heat exchanger 11, so that primary coolant 5 flows into auxiliary heat exchanger 24 at the same level as outlet level 52 and at the same temperature as the primary coolant 5 from main heat exchanger 11.

Under normal operating conditions, a portion of primary coolant 5 at temperature $T_2$ therefore flows into annular conduit 59 (defined by conducting sleeve 57) and up to and through upper inlet 55 into shell 54, flows downwards to yield heat to auxiliary coolant 25 circulating in pipe bundle 53, and finally out through lower outlet 56 and back to core 4.

Obviously, as it flows up annular conduit 59, primary coolant 5 is heated slightly by heat exchange with the wall of conducting sleeve 57 immersed in primary coolant 5, the temperature of which increases continuously, alongside an increase in level, between $T_2$ and $T_1$.

Apart from this slight increase in temperature - which, for the sake of simplicity, may be ignored - the auxiliary coolant 25 circulating in auxiliary heat exchanger 24 to withdraw heat from primary coolant 5 may be thought of as being at a temperature substantially equal to $T_2$. As already stated, according to the invention, auxiliary coolant 25 at temperature $T_2$ has a vapour pressure lower than the pressure at which external heat exchanger 26 is filled with noncondensable gas, thus preventing the auxiliary coolant 25 in lower manifold 61 of external heat exchanger 26 from boiling. In other words, in the above operating conditions, external heat exchanger 26 is incapable of removing heat, by auxiliary coolant 25 being prevented from boiling. At most, auxiliary coolant 25 is permitted a small amount of evaporation inside lower manifold 61 of external heat exchanger 26, which evaporation, however, may be limited by appropriately insulating the walls.

In short, under normal operating conditions of nuclear reactor 1, auxiliary cooling circuit 23 transmits no significant amount of heat from primary coolant 5 to the outside atmosphere, thus preventing a pointless loss of energy, as well as ensuring against primary coolant 5 solidifying in auxiliary heat exchanger 24 (which, given the substantially safety function of the auxiliary heat exchanger, must obviously be prevented).

In the event, on the other hand, of a malfunction of main heat exchanger 11, the hot primary coolant 5 from core 4 continues circulating through auxiliary heat exchanger 24 at gradually increasing temperature; and, as primary coolant 5 reaches a predetermined intervention temperature $T_3$ (higher than normal operating temperature $T_2$) at outlet level 52 from main heat exchanger 11, i.e. at the inlet to auxiliary heat exchanger 24, auxiliary cooling circuit 23 begins withdrawing heat from primary coolant 5. That is, if primary coolant 5 flowing into auxiliary heat exchanger 24 is at intervention temperature $T_3$, auxiliary coolant 25 also reaches the same intervention temperature $T_3$ inside auxiliary heat exchanger 24, inside pipe 69 connecting lower manifold 61 of external heat exchanger 26, and, obviously, inside lower manifold 61 itself. And since, according to the invention, the vapour pressure of auxiliary coolant 25 at temperatures higher than $T_2$ (and, in particular, at intervention temperature $T_3$) is higher than the pressure at which external heat exchanger 26 has been filled with noncondensable gas, at the same temperature, auxiliary coolant 25 in lower manifold 61 is now permitted to boil : the auxiliary coolant 25 vapour therefore entirely fills shaped pipes 63, compresses the noncondensable gas in upper manifold 62, heats shaped pipes 63 and so activates natural circulation of atmospheric air inside open conduit 64 (and the associated stack, if any) to draw in stream 65 and so condense auxiliary coolant 25, which, cooled, flows back by force of gravity into lower manifold 61. The auxiliary coolant 25 boiling process obviously also takes place, in auxiliary cooling circuit 23, upstream from lower manifold 61, and in particular inside pipe 69, along which hot oil from auxiliary heat exchanger 24 flows into lower manifold 61, and in which the pressure is lower. The presence of oil vapour improves the draw along pipe 69 and so assists natural circulation of the oil in cooling circuit 23.

Unlike similar known systems, intervention of auxiliary cooling circuit 23 calls for no manual or automatic activation, by featuring no air flow intercepting members : auxiliary cooling circuit 23, in fact, begins withdrawing heat from primary coolant 5 as soon as the (appropriately selectable) predetermined intervention temperature $T_3$ is reached.

In the event of damage to main heat exchanger 11 or auxiliary heat exchanger 24 inside vessel 2 of nuclear reactor 1, secondary coolant 15 or auxiliary coolant 25 - both defined, according to the invention, by synthetic oil - may be released into the mass of primary coolant 5. The consequences of this occurring, however, are extremely minor, by the pressure of primary cooling circuit 13 still remaining below, or at most equal to, the relatively low pressure of the circuit undergoing oil leakage. Moreover, by virtue of auxiliary conduit 40 substantially parallel to main heat exchanger 11 and auxiliary heat exchanger 24, even in the event of oil leakage at the bottom of the exchangers, the oil, being of a significantly lower density than primary coolant 5, would float up freely, with no mechanical obstacles, to the free surface 6 of primary coolant 5. Also, as stated, the fluid dynamic passage section of primary cooling circuit 13 is such that the downflow speed of primary coolant 5 is lower, in absolute value, than the float-up speed of the oil inside primary coolant 5 at that downflow speed.

Purely by way of a non-limiting example, nuclear reactor 1 may be cooled using a primary coolant 5 comprising a lead-bismuth eutectic, and having, under normal operating conditions, an outflow temperature $T_1$ from core 4 of about 420°C, and a core inflow temperature $T_2$ of about 320°C; secondary coolant 15 circulating in main heat exchanger 11, and auxiliary coolant 25 circulating in auxiliary cooling circuit 23 may be defined, according to the invention, by commercial synthetic oils, which are stable with a roughly 0.5 bar vapour pressure at temperature $T_2=320$°C; external heat exchanger 26 may contain, as noncondensable gas, nitrogen at 0.6 bar pressure to prevent the oil from boiling under normal operating conditions; upper manifold 62 may be sized to contain all the nitrogen at 1 bar pressure; and auxiliary cooling circuit 23 may have an intervention temperature $T_3$ of 350°C, at which the oil in question has a vapour pressure of about 1 bar.

In the event, for any reason, of an increase in the temperature of primary coolant 5 in primary cooling circuit 13, the temperature of the oil in auxiliary cooling circuit 23 also rises; and, on reaching intervention temperature $T_3$ of 350°C, at which the vapour pressure of the oil is about 1 bar, the oil in lower manifold 61 boils, shaped pipes 63 fill up with condensing oil vapour, and the nitrogen in upper manifold 62 only is compressed, thus activating the heat removal process.

As already stated, though reference is made for the sake of simplicity to one main and one auxiliary heat exchanger, it is understood that any number of exchangers may be used; and the main and/or auxiliary exchangers may comprise heat exchangers of different configurations from that described.

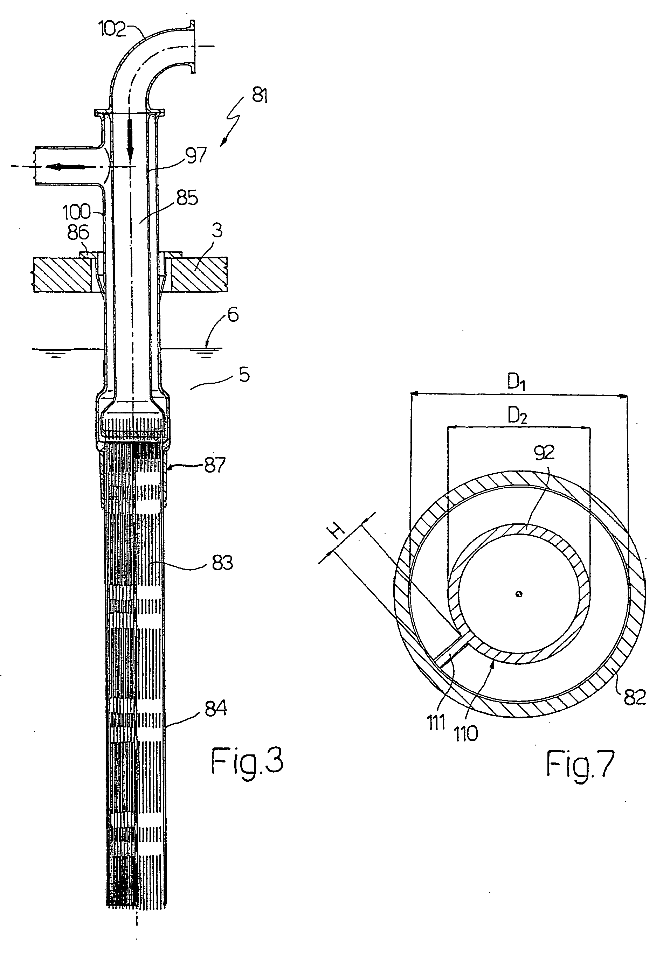

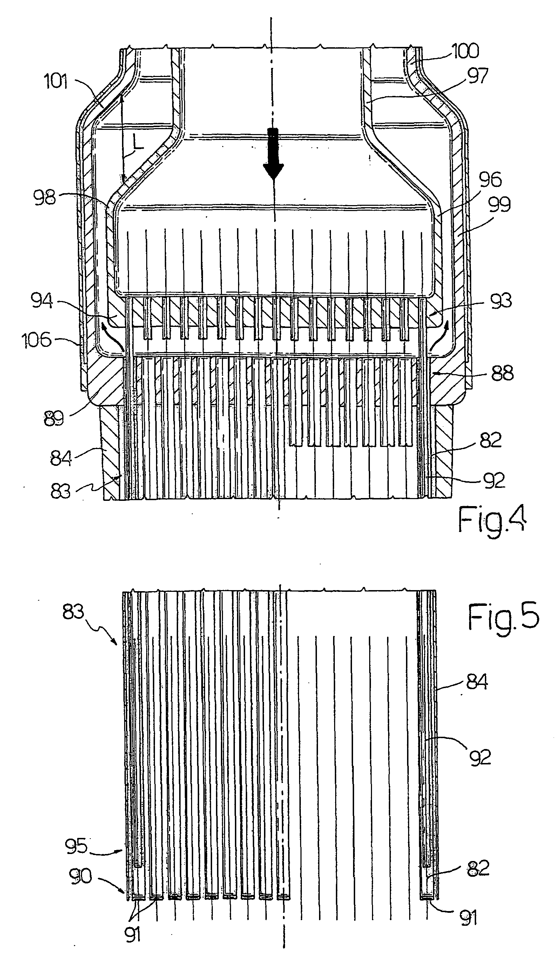

Figures 3 to 8, for example, show details of a preferred embodiment of a heat exchanger - indicated as a whole by 81 - for use, according to the invention, in a cooling system 10 of a nuclear reactor 1 substantially similar to the one described with reference to Figure 2. It is understood that the same solution may be employed for both main and auxiliary heat exchangers.

Heat exchanger 81 comprises a number of bayonet-type heat-exchange pipes 82 arranged substantially parallel to one another in a pipe bundle 83 and housed inside a shell 84; and an end portion 85 extending from a longitudinal end of pipe bundle 83. In the non-limiting embodiment shown in Figures 3 to 8, heat exchanger 81 is substantially cylindrical (but may be shaped differently, e.g. with an elliptic or, at any rate, transversely elongated section, to assist placement inside nuclear reactor 1) and is positioned vertically. More specifically, end portion 85 is fitted through and anchored in known manner, e.g. by means of a flange 86, to cover 3 of nuclear reactor 1, and extends downwards beneath free surface 6 of primary coolant 5 inside nuclear reactor 1; pipe bundle 83 of heat-exchange pipes 82 extends vertically downwards and is fully immersed in primary coolant 5; and shell 84 comprises, beneath free surface 6 of primary coolant 5, an inlet 87 through which primary coolant 5 flows into shell 84 and over the outside of heat-exchange pipes 82, in which flows a secondary coolant, e.g. synthetic oil. Though not shown for the sake of simplicity, provision may obviously be made for known supporting grilles to anchor heat-exchange pipes 82 to one another and to shell 84.

Each heat-exchange pipe 82 has a predetermined inside diameter $D_1$, is secured at an open top longitudinal end 88 to a first pipe plate 89, is closed by a plug 91 at a free bottom end 90 opposite the end 88 connected to pipe plate 89, and is fitted inside with a concentric, coaxial inner pipe 92 having an outside diameter $D_2$ smaller than inside diameter $D_1$ of heat-exchange pipe 82. A top end 93 of each inner pipe 92 projects longitudinally from top end 88 of respective heat-exchange pipe 82, and is connected to a second pipe plate 94 located over and axially movable with respect to pipe plate 89; inner pipes 92 are also movable axially with respect to heat-exchange pipes 82; and each inner pipe 92 is open both at top end 93 and at a bottom end 95 opposite end 93 and located a predetermined distance from plug 91 of heat-exchange pipe 82.

Pipe plate 94 supporting inner pipes 92 is connected by a fitting 96 to an inlet conduit 97 for the inflow of secondary coolant into heat exchanger 81 and which is smaller in diameter than pipe plate 94, so that fitting 96 comprises a converging portion 98; pipe plate 89 supporting heat-exchange pipes 82 is in turn connected by a fitting 99 to an outlet conduit 100 for the outflow of secondary coolant from heat exchanger 81 and which is substantially concentric with, and located radially outwards with respect to, inlet conduit 97; and outlet conduit 100 is preferably smaller in diameter than pipe plate 89, so that fitting 99 also comprises a converging portion 101 substantially axially facing, and a predetermined axial distance L from, converging portion 98 of fitting 96.

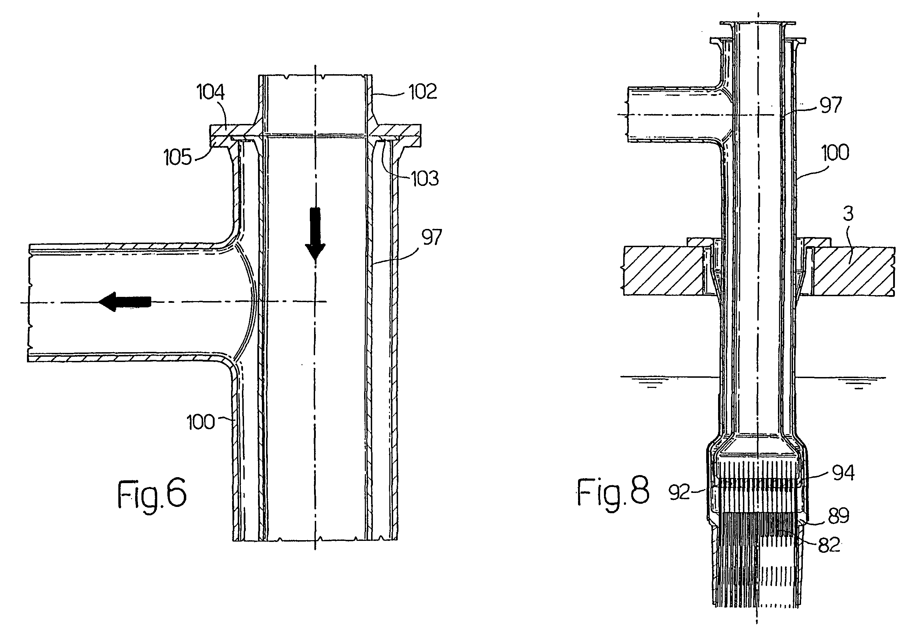

Inlet conduit 97 is also connected to an outer pipe 102 of any shape, e.g. (Figure 6) by connecting an end flange 103 of inlet conduit 97 to a corresponding flange 104 of outer pipe 102; and outlet conduit 100 may advantageously also be connected, by a respective flange 105, to flange 104 of outer pipe 102, but obviously with no fluid dynamic connection to outer pipe 102.

Once flange 104 of outer pipe 102 is detached from flanges 103 and 105 and outer pipe 102 is removed, inlet conduit 97 and outlet conduit 100 slide axially with respect to each other, as explained later on.

Pipe plate 89 and respective fitting 99 for connection to outlet conduit 100 may be housed in a heat shield 106.

With reference in particular to Figure 7, inner pipes 92 comprise, on respective radially-outer lateral surfaces 110, respective helical wings 111 of a height H just slightly less than half the difference between the inside diameter $D_1$ of heat-exchange pipes 82 and the outside diameter $D_2$ of inner pipes 92, that is :

$$H \cong 1/2(D_1 - D_2)$$

Helical wings 111 coil around respective inner pipes 92 with an ample pitch, e.g. equal to about ten times the outside diameter $D_2$ of inner pipes 92; and, for the reasons explained later on, the pitch of helical wings 111 is advantageously less than the axial distance L between converging portion 101 of fitting 99 and converging portion 98 of fitting 96.

In actual use, the cold secondary coolant from outside nuclear reactor 1 flows along outer pipe 102 and inlet conduit 97 to pipe plate 94, flows into and down inner pipes 92 to bottom ends 95, and then flows back up inside heat-exchange pipes 82 to remove heat from the primary coolant, which, in the meantime, flows down inside shell 84 and over the outside of heat-exchange pipes 82. The hot secondary coolant flows back up inside heat-exchange pipes 82 to pipe plate 89, along outlet conduit 100, and out of heat exchanger 81 to yield heat to the outside.

As shown in Figure 8, during maintenance, inlet conduit 97 - after first removing outer pipe 102 - may be raised with respect to outlet conduit 100 - using known equipment not shown for the sake of simplicity - so as to raise pipe plate 94 and connected inner pipes 92 with respect to heat-exchange pipes 82, which remain secured to pipe plate 89, so that the inner lateral surfaces of heat-exchange pipes 82 are scraped by helical wings 111 on inner pipes 92 to remove any deposits. Obviously, since the maximum displacement of inner pipes 92 with respect to heat-exchange pipes 82 equals axial distance L between converging portion 101 of fitting 99 and converging portion 98 of fitting 96, thorough scraping of the inner surfaces of heat-exchange pipes 82 depends on the pitch of helical wings 111 on inner pipes 92 being less than axial distance L.

As compared with currently used heat exchangers, the particular design of heat exchanger 81 affords the following advantages: in particular, a considerable reduction in the quantity of secondary coolant (oil) circulating close to the core of the nuclear reactor and subjected to greater neutron radiation and hence activation and/or deterioration (heat exchanger 81, in fact, has no oil collecting manifolds at the bottom); higher speed of the secondary coolant inside heat-exchange pipes 82 (the passage section of which is reduced by inner pipes 92) thus improving heat exchange; heat-exchange pipes 82, being secured only at top ends 88 to pipe plate 89, may expand freely downwards with no thermal stress, unlike pipes secured, for example, between two end pipe plates: this therefore provides for reducing the risk of heat-exchange pipes 82 bending as a result of compression, which in turn provides for reducing the number of grilles supporting heat-exchange pipes 82, and so reducing the load losses of the primary coolant, which are further reduced by the primary coolant flowing out of heat exchanger 81 axially with no radial deviations. Finally, helical wings 111, which in fact define respective radial guides between heat-exchange pipes 82 and inner pipes 92, reduce or eliminate the risk of fluid-induced vibration, besides, as stated, enabling extremely straightforward, low-cost removal of any deposits on the inside heat-exchange pipes 82.

Clearly, changes may be made to the cooling system as described herein without, however, departing from the scope of the accompanying Claims.

## Claims

1. A nuclear reactor (1), in particular a liquid-metal- or molten-salt-cooled nuclear reactor, with a cooling system (10) comprising first conducting means (12) for conducting a primary coolant (5) and defining, inside a vessel (2) of said nuclear reactor, a primary cooling circuit (13) between a core (4) of said nuclear reactor and at least one main heat exchanger (11); a secondary cooling circuit (22) for supplying said at least one main heat exchanger (11) with a secondary coolant (15) to withdraw heat from said primary coolant (5); circulating means (20) for circulating said primary coolant (5) in said primary cooling circuit (13) to keep said primary coolant (5) moving at a predetermined circulation speed between said core (4) and said, at least one main heat exchanger (11); and an auxiliary conduit (40) located along said primary cooling circuit (13) and in parallel with said at least one main heat exchanger (11) the reactor (1) being **characterized in that** said secondary coolant (15) is a low-vapour-pressure fluid immiscible with said primary coolant (5) and of a lower density than said primary coolant (5); and **in that** said cooling system also comprises means for limiting said predetermined circulation speed of said primary coolant (5) moving inside said primary cooling circuit (13) to a value below or equal to a float-up speed of said secondary coolant (15) inside said primary coolant moving at said predetermined speed.

2. A reactor as claimed in Claim 1, **characterized in that** said auxiliary conduit (40) is located, in parallel with said at least one main heat exchanger (11), in a downflow portion (33) of said primary cooling circuit (13); said auxiliary conduit (40) having a fluid dynamic passage section sufficient to ensure adequate circulation of said primary coolant (5) through said core (4) in the event of circulation failure of said primary coolant (5) inside said at least one main heat exchanger (11).

3. A reactor as claimed in Claim 1 or 2, **characterized in that** said primary cooling circuit (13) has a fluid dynamic passage section of such a size that the downflow speed of said primary coolant (5) in the primary cooling circuit is less, in absolute value, than the float-up speed of said secondary coolant (15) in said primary coolant (5).

4. A reactor as claimed in Claim 2 or 3, **characterized in that** said first conducting means (12) define a downflow conduit (33) between the vessel (2) and an enclosure (31) extending from the core (4); said at least one main heat exchanger (11) being inserted inside said downflow conduit (33) to intercept a flow of said primary coolant (5), and being so sized as not to entirely occupy a fluid dynamic passage section of said downflow conduit (33); said auxiliary conduit (40) being defined by a portion of said downflow conduit (33) not occupied by said at least one main heat exchanger (11).

5. A reactor as claimed in Claim 4, **characterized in that** said at least one main heat exchanger (11) comprises a pipe bundle (43) housed inside a substantially cylindrical shell (44) having an upper opening (45) and a lower opening (46) at different levels; said pipe bundle (43) being fully immersed in said primary coolant (5) circulating in said primary cooling circuit (13); and said upper opening (45) and said lower opening (46) respectively defining an inlet level (51) and an outlet level (52) of said primary coolant (5) into and from said at least one main heat exchanger (11).

6. A reactor as claimed in Claim 5, **characterized in that** said at least one main heat exchanger (11) has such a fluid dynamic passage section for said primary coolant (5) that, for a flow equal to the total flow of said primary coolant (5) circulating in said primary cooling circuit (13), the load losses of the primary coolant (5) through said at least one main heat exchanger (11) are less than or equal to the draw corresponding to the difference in weight between a column of primary coolant (5) inside said at least one main heat exchanger (11) and between said inlet and outlet levels (51,52), and a corresponding column of primary coolant (5) between said inlet and outlet levels (51,52) and at an outflow temperature (T1) of said primary coolant (5) from said core (4).

7. A reactor as claimed in Claim 6, **characterized in that** said first conducting means (12) and said at least one main heat exchanger (11) determine a temperature range, varying progressively alongside a variation in level, of said primary coolant (5) in said downflow conduit (33); said primary coolant (5) being stratified at a temperature varying progressively between a first temperature (T1) at said inlet level (51), and a second temperature (T2), lower than said first temperature (T1), at said outlet level (52); said first temperature (T1) being substantially equal to said outflow temperature of said primary coolant (5) from said core (4); and said second temperature (T2) being substantially equal to an inflow temperature of said primary coolant (5) into said core (4).

8. A reactor as claimed in Claim 7, **characterized by** also comprising at least one safety auxiliary cooling circuit (23) in which circulates an auxiliary coolant (25) to withdraw heat from the primary coolant (5) upon the primary coolant reaching a predetermined intervention temperature (T3); said auxiliary cooling circuit (23) in turn comprising second conducting means (57) for withdrawing said primary coolant (5) at a predetermined level, inside said downflow conduit (33), at which said primary coolant (5) is substantially at said predetermined intervention temperature (T3).

9. A reactor as claimed in Claim 8, **characterized in that** said auxiliary cooling circuit (23) in turn comprises at least one auxiliary heat exchanger (24) housed in said vessel (2) of the nuclear reactor (1); at least one external heat exchanger (26) outside said vessel (2); and a connecting circuit (69, 70) for connecting said at least one auxiliary heat exchanger (24) and said at least one external heat exchanger (26); said auxiliary coolant (25) being a low-vapour-pressure fluid.

10. A reactor as claimed in Claim 9, **characterized in that** said auxiliary cooling circuit (23) contains predetermined quantities of said auxiliary coolant (25) and of a noncondensable gas at a predetermined fill pressure; said auxiliary coolant (25) having, at temperatures below said predetermined intervention temperature (T3), a vapour pressure lower than said fill pressure of said noncondensable gas; and said auxiliary coolant (25) having, at temperatures above said predetermined intervention temperature (T3), a vapour pressure higher than said fill pressure of said noncondensable gas.

11. A reactor as claimed in Claim 10, **characterized in that** said at least one auxiliary heat exchanger (24) is located along said primary cooling circuit (13) and in parallel with said at least one main heat exchanger (11) and said auxiliary conduit (40) ; said at least one auxiliary heat exchanger (24) comprising, for said primary coolant (5), an inlet (58) at substantially the same level as said outlet level (52) of said primary coolant (5) from said at least one main heat exchanger (11).

12. A reactor as claimed in Claim 11, **characterized in that** said at least one auxiliary heat exchanger is located inside said downflow conduit (33) and immersed in said primary coolant (5); said inlet for said primary coolant (5) being defined by a bottom end (58) of a conducting sleeve (57) surrounding, at a predetermined radial distance, said at least one auxiliary heat exchanger (24).

13. A reactor as claimed in one of Claims 10 to 12, **characterized in that** said at least one external heat exchanger (26) comprises a lower manifold (61), an upper manifold (62), and a bank of shaped pipes (63) connecting said lower and upper manifold (61,62); said bank of shaped pipes (63) being housed in an open conduit (64) for the passage of a stream (65) of naturally-circulated atmospheric air.

14. A reactor as claimed in Claim 13, **characterized in that** said lower and upper manifold (61, 62) are substantially cylindrical and arranged horizontally and parallel to each other; said shaped pipes (63) being U-shaped finned pipes, and each having end fittings for connection to a top portion of said lower manifold (61) and to a bottom portion of said upper manifold (62); a bottom portion (66) of said lower manifold (61) having, at opposite longitudinal ends (67, 68), a first and a second pipe (69,70) for connection to said at least one auxiliary heat exchanger (24).

15. A reactor as claimed in Claim 14, **characterized in that** said auxiliary coolant (25) in said auxiliary cooling circuit (23) is of such a quantity that, at temperatures below said predetermined intervention temperature, the auxiliary coolant partially fills said lower manifold (61) of said at least one external heat exchanger (26) up to a predetermined level (73); said upper manifold (62) and said shaped pipes (63) being filled with said noncondensable gas at said predetermined fill pressure.

16. A reactor as claimed in one of Claims 9 to 15, **characterized in that** said at least one main heat exchanger (11) and/or said at least one auxiliary heat exchanger (24) are heat exchangers (81) comprising a bundle of bayonet-type heat-exchange pipes (82) immersed substantially vertically in said primary coolant (5); respective inner pipes (92) being inserted concentrically and coaxially inside said heat-exchange pipes (82), and having an outside diameter (D2) smaller than an inside diameter (D1) of said heat-exchange pipes (82).

17. A reactor as claimed in Claim 16, **characterized in that** said heat-exchange pipes (82) are connected, at respective open top first ends (88), to a first pipe plate (89), and are closed by respective plugs (91) at the bottom, at respective free second ends (90) opposite said first ends (88) connected to the first pipe plate (89); said inner pipes (92) being open both at respective top ends (93) and at respective bottom ends (95) located a predetermined distance from said plugs (92) of said heat-exchange pipes (82); said inner pipes (92) projecting axially, by said respective top ends (93), from said first ends (88) of said heatexchange pipes (82), and being connected, by said respective top ends (93), to a second pipe plate (94) located over and movable axially with respect to said first pipe plate (89); said inner pipes (92) being movable axially with respect to said heat-exchange pipes (82).

18. A reactor as claimed in Claim 17, **characterized in that** said second pipe plate (94), to which said inner pipes (92) are connected, is connected by a first fitting (96) to an inlet conduit (97); said first pipe plate (89), to which said heat-exchange pipes (82) are connected, being connected by a second fitting (99) to an outlet conduit (100) substantially concentric with and radially outer with respect to said inlet conduit (97); said first fitting (96) substantially axially facing said second fitting (99) at a predetermined axial distance (L); said inlet conduit (97) and said outlet conduit (100) being axially slidable with respect to each other, integrally with said second pipe plate (94) and said first pipe plate (89) respectively.

19. A reactor as claimed in claim 18, **characterized in that** said inner pipes (92) comprise, on respective radially-outer lateral surfaces (110), respective helical wings (111) of a height (H) just slightly less than half the difference between said inside diameter (D1) of said heat-exchange pipes (82) and said outside diameter (D2) of said inner pipes (92), i. e.
H - 1/2 (D1-D2) ; said helical wings (111) winding about the respective said inner pipes (92) with a pitch smaller than said axial distance (L) between said first fitting (96) and said second fitting (99).

20. A reactor claimed in any one of the foregoing Claims, **characterized in that** said low-vapour-pressure fluid is a synthetic oil having a low vapour pressure at temperatures below about 350-400° C.

**Patentansprüche**

1. Kernreaktor (1), insbesondere ein Flüssigmetall- oder Salzschmelzen-gekühlter Kernreaktor, mit einem Kühlsystem (10), das aufweist: erste Leitungseinrichtungen (12) zum Leiten eines primären Kühlmittels (5), die im Innern eines Behälters (2) des Kernreaktors einen primären Kühlkreis (13) zwischen einem Kern (4) des Kernreaktors und mindestens einem Hauptwärmetauscher (11) definieren; einen sekundären Kühlkreis (22) zum Versorgen des mindestens einen Hauptwärmetauschers (11) mit einem sekundären Kühlmittel (15), um Wärme von dem primären Kühlmittel (5) abzuführen; Zirkulationseinrichtungen (20) zum Zirkulieren des primären Kühlmittels (5) in dem primären Kühlkreis (13), um das primäre Kühlmittel (5) bei einer vorbestimmten Zirkulationsgeschwindigkeit zwischen dem Kern (4) und dem mindestens einen Hauptwärmetauscher (11) in Bewegung zu halten; und einen Hilfskanal (40), der entlang dem primären Kühlkreis (13) und parallel zu dem mindestens einen Hauptwärmetauscher (11) angeordnet ist, wobei der Reaktor (1) **dadurch gekennzeichnet ist, dass** das sekundäre Kühlmittel (15) ein Niederdampfdruckfluid ist, das mit dem primären Kühlmittel (5) nicht mischbar und von einer niedrigeren Dichte als das primäre Kühlmittel (5) ist; und **dadurch**, dass das Kühlsystem auch Einrichtungen zum Begrenzen der vorbestimmten Zirkulationsgeschwindigkeit des primären Kühlmittels (5), das sich innerhalb des primären Kühlkreises (13) bewegt, auf einen Wert unter oder gleich einer Auftriebsgeschwindigkeit des sekundären Kühlmittels (15) innerhalb des primären Kühlmittels umfasst, das sich mit der vorbestimmten Geschwindigkeit bewegt.

2. Reaktor nach Anspruch 1, **dadurch gekennzeichnet, dass** der Hilfskanal (40) parallel zu dem mindestens einen Hauptwärmetauscher (11) in einem Abwärtsströmungsteil (33) des primären Kühlkreises (13) angeordnet ist; wobei der Hilfskanal (40) einen fluiddynamischen Durchlassquerschnitt aufweist, der ausreicht, um eine angemessene Zirkulation des primären Kühlmittels (5) durch den Kern (4) im Fall einer Zirkulationsstörung des primären Kühlmittels (5) im Innern des mindestens einen Hauptwärmetauschers (11) zu gewährleisten.

3. Reaktor nach Anspruch 1 oder 2, **dadurch gekennzeichnet, dass** der primäre Kühlkreis (13) einen fluiddynamischen Durchlassquerschnitt von einer solchen Größe aufweist, dass die Abwärtsströmungsgeschwindigkeit des primären Kühlmittels (5) im primären Kühlkreis in absolutem Wert kleiner als die Auftriebsgeschwindigkeit - des sekundären Kühlmittels (15) in dem primären Kühlmittel (5) ist.

4. Reaktor nach Anspruch 2 oder 3, **dadurch gekennzeichnet, dass** die ersten Leitungseinrichtungen (12) einen Abwärtsströmungskanal (33) zwischen dem Behälter (2) und einer Einschließung (31) begrenzen, die sich vom Kern (4) erstreckt; wobei der mindestens eine Hauptwärmetauscher (11) im Innern des Abwärtsströmungskanals (33) eingesetzt ist, um einen Strom des primären Kühlmittels (5) abzufangen, und so dimensioniert ist, dass er einen fluiddynamischen Durchlassquerschnitt des Abwärtsströmungskanals (33) nicht völlig einnimmt; wobei der Hilfskanal (40) durch einen Teil des Abwärtsströmungskanals (33) begrenzt wird, der durch den mindestens einen Hauptwärmetauscher (11) nicht eingenommen wird.

5. Reaktor nach Anspruch 4, **dadurch gekennzeichnet, dass** der mindestens eine Hauptwärmetauscher (11) ein Rohrbündel (43) umfasst, das im Innern einer im Wesentlichen zylindrischen Hülle (44) mit einer oberen Öffnung (45) und einer unteren Öffnung (46) an unterschiedlichen Niveaus beherbergt ist; wobei das Rohrbündel (43) ganz in das primäre Kühlmittel (5) eingetaucht ist, das in dem primären Kühlkreis (13) zirkuliert; und wobei die obere Öffnung (45) bzw. die untere Öffnung (46) ein Einlassniveau (51) und ein Auslassniveau (52) des primären Kühlmittels (5) in den und aus dem mindestens einen Hauptwärmetauscher (11) begrenzen.

6. Reaktor nach Anspruch 5, **dadurch gekennzeichnet, dass** der mindestens eine Hauptwärmetauscher (11) einen solchen fluiddynamischen Durchlassquerschnitt für das primäre Kühlmittel (5) aufweist, dass für einen Strom, der gleich dem Gesamtstrom des primären Kühlmittels (5) ist, das in dem primären Kühlkreis (13) zirkuliert, die Lastverluste des primären Kühlmittels (5) durch den mindestens einen Hauptwärmetauscher (11) kleiner als oder gleich dem Zug sind, der dem Unterschied im Gewicht zwischen einer primären Kühlmittel (5) Säule im Innern des mindestens einen Hauptwärmetauschers (11) und zwischen dem Einlass- und Auslassniveau (51, 52) und einer entsprechenden primären Kühlmittel (5)-Säule zwischen dem Einlass- und Auslassniveau (51, 52) und bei einer Ausflusstemperatur (T1) des primären Kühlmittels (5) aus dem Kern (4) entspricht.

7. Reaktor nach Anspruch 6, **dadurch gekennzeichnet, dass** die ersten Leitungseinrichtungen (12) und der mindestens eine Hauptwärmetauscher (11) einen Temperaturbereich bestimmen, der parallel zu einer Variation im Niveau des primären Kühlmittels (5) in dem Abwärtsströmungskanal (33) zunehmend variiert; wobei das primäre Kühlmittel (5) bei einer Temperatur geschichtet ist, die zwischen einer ersten Temperatur (T1) an dem Einlassniveau (51) und einer zweiten Temperatur (T2), die niedriger als die erste Temperatur (T1) ist, an dem Auslassniveau (52) zunehmend variiert; wobei die erste Temperatur (T1) im Wesentlichen gleich der Ausflusstemperatur des primären Kühlmittels (5) aus dem Kern (4) ist; und wobei die zweite Temperatur (T2) im Wesentlichen gleich einer Zuflusstemperatur des primären Kühlmittels (5) in den Kern (4) ist.

8. Reaktor nach Anspruch 7, **dadurch gekennzeichnet, dass** er auch mindestens einen Sicherheitshilfskühlkreis (23) umfasst, in dem ein Hilfskühlmittel (25) zirkuliert, um Wärme von dem primären Kühlmittel (5) abzuführen, nachdem das primäre Kühlmittel eine vorbestimmte Interventionstemperatur (T3) erreicht; wobei der Hilfskühlkreis (23) wiederum zweite Leitungseinrichtungen (57) umfasst, um das primäre Kühlmittel (5) bei einem vorbestimmten Niveau im Innern des Abwärtsströmungskanals (33) abzuführen, bei dem sich das primäre Kühlmittel (5) im Wesentlichen auf der vorbestimmten Interventionstemperatur (T3) befindet.

9. Reaktor nach Anspruch 8, **dadurch gekennzeichnet, dass** der Hilfskühlkreis (23) wiederum umfasst: mindestens einen Hilfswärmetauscher (24), der in dem Behälter (2) des Kernreaktors (1) beherbergt wird; mindestens einen externen Wärmetauscher (26) außerhalb des Behälters (2); und einen Verbindungskreis (69, 70), um den mindestens einen Hilfswärmetauscher (24) und den mindestens einen externen Wärmetauscher (26) zu verbinden; wobei das Hilfskühlmittel (25) ein Niederdampfdruckfluid ist.

10. Reaktor nach Anspruch 9, **dadurch gekennzeichnet, dass** der Hilfskühlkreis (23) vorbestimmte Mengen des Hilfskühlmittels (25) und eines nichtkondensierbaren Gases bei einem vorbestimmten Fülldruck enthält; wobei das Hilfskühlmittel (25) bei Temperaturen unter der vorbestimmten Interventionstemperatur (T3) einen Dampfdruck aufweist, der niedriger als der Fülldruck des nichtkondensierbaren Gases ist; und wobei das Hilfskühlmittel (25) bei Temperaturen über der vorbestimmten Interventionstemperatur (T3) einen Dampfdruck aufweist, der höher als der Fülldruck des nichtkondensierbaren Gases ist.

11. Reaktor nach Anspruch 10, **dadurch gekennzeichnet, dass** der mindestens eine Hilfswärmetauscher (24) entlang dem primären Kühlkreis (13) und parallel zu dem mindestens einen Hauptwärmetauscher (11) und dem Hilfskanal (40) angeordnet ist; wobei der mindestens eine Hilfswärmetauscher (24) für das primäre Kühlmittel (5) einen Einlass (58) bei im Wesentlichen demselben Niveau wie das Auslassniveau (52) des primären Kühlmittels (5) von dem mindestens einen Hauptwärmetauscher (11) umfasst.

12. Reaktor nach Anspruch 11, **dadurch gekennzeichnet, dass** sich der mindestens eine Hilfswärmetauscher im Innern des Abwärtsströmungskanals (33) befindet und in dem primären Kühlmittel (5) eingetaucht ist; wobei der Einlass für das primäre Kühlmittel (5) durch ein Fußende (58) einer Leitungshülse (57) begrenzt wird, die bei einem vorbestimmten radialen Abstand den mindestens einen Hilfswärmetauscher (24) umgibt.

13. Reaktor nach einem der Ansprüche 10 bis 12, **dadurch gekennzeichnet, dass** der mindestens eine externe Wärmetauscher (26) ein unteres Manifold (61), ein oberes Manifold (62) und ein Bündel von Profilrohren (63) umfasst, die das untere und obere Manifold (61, 62) verbinden; wobei das Bündel von Profilrohren (63) in einem offenen Kanal (64) für den Durchlass eines Stroms (65) von natürlich zirkulierter Atmosphärenluft beherbergt wird.

14. Reaktor nach Anspruch 13, **dadurch gekennzeichnet, dass** das untere und obere Manifold (61, 62) im Wesentlichen zylindrisch sind und horizontal und parallel zueinander angeordnet sind; wobei die Profilrohre (63) U-förmige Rippenrohre sind und jeweils Endverbindungsstücke zur Verbindung mit einem Kopfteil des unteren Manifolds (61) und mit einem Fußteil des oberen Manifolds (62) aufweisen; wobei ein Fußteil (66) des unteren Manifold (61) an entgegengesetzten Längsenden (67, 68) ein erstes und ein zweites Rohr (69, 70) zur Verbindung mit dem mindestens einen Hilfswärmetauscher (24) aufweisen.

15. Reaktor nach Anspruch 14, **dadurch gekennzeichnet, dass** das Hilfskühlmittel (25) in dem Hilfskühlkreis (23) von einer solchen Menge ist, dass bei Temperaturen unter der vorbestimmten Interventionstemperatur das Hilfskühlmittel teilweise das untere Manifold (61) des mindestens einen externen Wärmetauschers (26) bis zu einem vorbestimmten Niveau (73) füllt; wobei das obere Manifold (62) und die Profilrohre (63) mit dem nichtkondensierbaren Gas bei dem vorbestimmten Fülldruck gefüllt sind.

16. Reaktor nach einem der Ansprüche 9 bis 15, **dadurch gekennzeichnet, dass** der mindestens eine Hauptwärmetauscher (11) und/oder der mindestens eine Hilfswärmetauscher (24) Wärmetauscher (81) sind, die ein Bündel von Bajonettyp-Wärmerohren (82) umfassen, die im Wesentlichen vertikal in dem primären Kühlmittel (5) eingetaucht sind; wobei jeweilige Innenrohre (92) im Innern der Wärmerohre (82) konzentrisch und koaxial eingesetzt sind und einen Außendurchmesser (D2) aufweisen, der kleiner als ein Innendurchmesser (D1) der Wärmerohre (82) ist.

17. Reaktor nach Anspruch 16, **dadurch gekennzeichnet, dass** die Wärmerohre (82) an jeweiligen offenen ersten Kopfenden (88) mit einer ersten Rohrplatte (89) verbunden sind und durch jeweilige Verschlussstücke (91) unten an jeweiligen freien zweiten Enden (90) entgegengesetzt zu den ersten Enden (88), die mit der ersten Rohrplatte (89) verbunden sind, verschlossen sind; wobei die Innenrohre (92) sowohl an jeweiligen Kopfenden (93) als auch an jeweiligen Fußenden (95) offen sind, die einen vorbestimmten Abstand von den Verschlussstücken (92) der Wärmerohre (82) angeordnet sind; wobei die Innenrohre (92) durch die jeweiligen Kopfenden (93) von den ersten Enden (88) der Wärmerohre (82) axial vorstehen und durch die jeweiligen Kopfenden (93) mit einer zweiten Rohrplatte (94) verbunden sind, die sich über der ersten Rohrplatte (89) befindet und in Bezug zu ihr axial bewegbar ist; wobei die Innenrohre (92) in Bezug zu den Wärmerohren (82) axial bewegbar sind.

18. Reaktor nach Anspruch 17, **dadurch gekennzeichnet, dass** die zweite Rohrplatte (94), an der die Innenrohre (92) verbunden sind, durch ein erstes Verbindungsstück (96) mit einem Einlasskanal (97) verbunden ist; wobei die erste Rohrplatte (89), an der die Wärmerohre (82) verbunden sind, durch ein zweites Verbindungsstück (99) mit einem Auslasskanal (100) verbunden ist, der in Bezug zu dem Einlasskanal (97) im Wesentlichen konzentrisch und in Bezug zu ihm radial außen gelegen ist; wobei das erste Verbindungsstück (96) dem zweiten Verbindungsstück (99) mit einem vorbestimmten axialen Abstand (L) im Wesentlichen axial gegenüberliegt; wobei der Einlasskanal (97) und der Auslasskanal (100) als integrale Einheit mit der zweiten Rohrplatte (94) bzw. der ersten Rohrplatte (89) in Bezug zueinander axial verschiebbar sind.

19. Reaktor nach Anspruch 18, **dadurch gekennzeichnet, dass** die Innenrohre (92) auf jeweiligen radial außen gelegenen Mantelflächen (110) jeweilige spiralförmigen Flügel (111) von einer Höhe (H) umfassen, die bloß geringfügig kleiner als die Hälfte des Unterschieds zwischen dem Innendurchmesser (D1) der Wärmerohre (82) und dem Außendurchmesser (D2) der Innenrohre (92) ist, d.h.
H - 1/2 (D1-D2); wobei sich die spiralförmigen Flügel (111) um die jeweiligen besagten Innenrohre (92) mit einer Schlaglänge winden, die kleiner als der axiale Abstand (L) zwischen dem ersten Verbindungsstück (96) und dem zweiten Verbindungsstück (99) ist.

20. Reaktor nach einem der vorangehenden Ansprüche, **dadurch gekennzeichnet, dass** das Niederdampfdruckfluid Syntheseöl mit einem niedrigen Dampfdruck bei Temperaturen unter etwa 350-400°C ist.

## Revendications

1. Un réacteur nucléaire (1), en particulier un réacteur nucléaire refroidi par un métal liquide ou par un sel fondu, avec un système de refroidissement (10) comprenant : des premiers moyens de canalisation (12), pour conduire un réfrigérant primaire (5) et définir, à l'intérieur d'un récipient (2) dudit réacteur nucléaire, un circuit (13) de refroidissement primaire entre un coeur (4) dudit réacteur nucléaire et au moins un échangeur de chaleur principal (11); un circuit de refroidissement secondaire (22) pour fournir audit au moins un échangeur de chaleur principal (11) un réfrigérant secondaire (15) pour extraire de la chaleur dudit réfrigérant primaire (5); des moyens de circulation (20) pour faire circuler ledit réfrigérant primaire (5) dans ledit circuit de refroidissement primaire (13) pour maintenir ledit réfrigérant primaire (5) en mouvement, à une vitesse de circulation prédéterminée, entre ledit coeur (4) et ledit au moins un échangeur de chaleur principal (11); et un conduit auxiliaire (40) placé le long dudit circuit de refroidissement primaire (13) et parallèlement audit au moins un échangeur de chaleur principal (11), le réacteur (1) étant **caractérisé en ce que** ledit réfrigérant secondaire (15) est un fluide à faible pression de vapeur, non miscible avec ledit réfrigérant primaire (5) et d'une masse volumique inférieure à celle dudit réfrigérant primaire (5); et **en ce que** ledit système de refroidissement comprend, également, des moyens pour limiter ladite vitesse de circulation prédéterminée dudit réfrigérant primaire (5) se déplaçant à l'intérieur dudit circuit de refroidissement primaire (13) à une valeur inférieure ou égale à une vitesse de flottaison dudit réfrigérant secondaire (15) à l'intérieur dudit réfrigérant primaire se déplaçant à ladite vitesse prédéterminée.

2. Un réacteur selon la revendication 1, **caractérisé en ce que** ledit conduit auxiliaire (40) est placé, parallèlement audit au moins échangeur de chaleur principal (11), dans une partie d'écoulement descendant (33) dudit circuit de refroidissement primaire (13); ledit conduit auxiliaire (40) ayant une section de passage dynamique de fluide, suffisante pour assurer une circulation appropriée dudit réfrigérant primaire (5) à travers ledit coeur (4) dans l'éventualité d'une défaillance de circulation dudit réfrigérant primaire (5) à l'intérieur dudit au moins un échangeur de chaleur principal (11).

3. Un réacteur selon la revendication 1 ou 2, **caractérisé en ce que** ledit circuit de refroidissement primaire (13) présente une section de passage dynamique de fluide d'une taille telle que la vitesse d'écoulement descendant dudit réfrigérant primaire (5) dans le circuit de refroidissement primaire est inférieure, en valeur absolue, à la vitesse de flottaison dudit réfrigérant secondaire (15) dans ledit réfrigérant primaire (5).

4. Un réacteur selon la revendication 2 ou 3, **caractérisé en ce que** lesdits premiers moyens de canalisation (12) définissent un conduit d'écoulement descendant (33) entre le récipient (2) et une enceinte (31) s'étendant depuis le coeur (4); ledit au moins un échangeur de chaleur principal (11) étant inséré à l'intérieur dudit conduit d'écoulement descendant (33), pour intercepter un écoulement dudit réfrigérant primaire (5), et étant dimensionné de manière à ne pas occuper la totalité d'une section de passage dynamique de fluide dudit conduit d'écoulement descendant 33; ledit conduit auxiliaire (40) étant défini par une partie dudit conduit à écoulement descendant (33) qui n'est pas occupée par ledit au moins un échangeur de chaleur principal (11).

5. Un réacteur selon la revendication 4, **caractérisé en ce que** ledit au moins un échangeur de chaleur principal (11) comprend un faisceau de tubes (43) logé à l'intérieur d'une enveloppe (44), sensiblement cylindrique, ayant une ouverture supérieure (45) et une ouverture inférieure (46) à des niveaux différents; ledit faisceau de tubes (43) étant complètement immergé dans ledit réfrigérant primaire (5) circulant dans ledit circuit de refroidissement primaire (13); et ladite ouverture supérieure (45) et ladite ouverture inférieure (46) définissant, respectivement, un niveau d'entrée (51) et un niveau de sortie (52) dudit réfrigérant primaire (5), pénétrant dans, et sortant dudit au moins un échangeur de chaleur principal (11).

6. Un réacteur selon la revendication 5, **caractérisé en ce que** ledit au moins un échangeur de chaleur principal (11) présente une section de passage dynamique de fluide pour ledit réfrigérant primaire (5) telle que, pour un écoulement égal à l'écoulement total dudit réfrigérant primaire (5) à travers dans ledit circuit de refroidissement primaire (13), les pertes de charge du réfrigérant primaire (5), passant par ledit au moins un échangeur de chaleur principal (11), sont inférieures ou égales à l'effet de tirage correspondant à la différence de poids entre une colonne de réfrigérant primaire (5) située à l'intérieur dudit au moins un échangeur de chaleur principal (11) et entre lesdits niveaux d'entrée et de sortie (51, 52), et une colonne correspondante du réfrigérant primaire (5) entre lesdits niveaux d'entrée et de sortie (51, 52) et à une température de sortie d'écoulement (T1) dudit réfrigérant primaire (5) hors dudit coeur (4).

7. Un réacteur selon la revendication 6, **caractérisé en ce que** lesdits premiers moyens de canalisation (12) et ledit au moins un échangeur de chaleur principal (11) déterminent une plage de températures, variant progressivement en évoluant avec la variation de niveau, dudit réfrigérant primaire (5) dans ledit conduit à écoulement descendant (33); ledit réfrigérant primaire (5) étant stratifié à une température variant progressivement, entre une première température (T1) audit niveau d'entrée (51) et une deuxième température (T2) inférieure à ladite première température (T1), audit niveau de sortie (52); ladite première température (T1) étant sensiblement égale à la température de sortie d'écoulement dudit réfrigérant primaire (5) venant dudit coeur (4); et ladite deuxième température (T2) étant sensiblement égale à la température d'entrée d'écoulement dudit réfrigérant primaire (5) dans ledit coeur (4).

8. Un réacteur selon la revendication 7, **caractérisé en ce qu'**il comprend également au moins un circuit de refroidissement auxiliaire de sécurité (23), dans lequel circule un réfrigérant auxiliaire (25) pour extraire de la chaleur du réfrigérant primaire (5), lorsque le réfrigérant primaire atteint une température d'intervention (T3) prédéterminée; ledit circuit de refroidissement auxiliaire, à son tour, comprenant des deuxièmes moyens de canalisation (57) pour extraire ledit réfrigérant primaire (5) à un niveau prédéterminé, à l'intérieur dudit conduit à écoulement descendant (33), auquel ledit réfrigérant primaire (5) est sensiblement à ladite température d'intervention (T3) prédéterminée.

9. Un réacteur selon la revendication 8, **caractérisé en ce que** ledit circuit de refroidissement auxiliaire (23), à son tour, comprend : au moins un échangeur de chaleur auxiliaire (24) logé dans ledit récipient (2) du réacteur nucléaire (1); au moins un échangeur de chaleur externe (26) extérieur audit récipient (2); et un circuit de liaison (69, 70) pour connecter ledit au moins un échangeur de chaleur auxiliaire (24) et ledit au moins un échangeur de chaleur externe (26); ledit réfrigérant auxiliaire (25) étant un fluide à basse pression de vapeur.

10. Un réacteur selon la revendication 9, **caractérisé en ce que** ledit circuit de refroidissement auxiliaire (23) contient des quantités prédéterminées dudit réfrigérant auxiliaire (25) et d'un gaz non condensable, à une pression de remplissage prédéterminée; ledit réfrigérant auxiliaire (25) ayant, à une température inférieure à ladite température d'intervention (T3) prédéterminée, une pression de vapeur inférieure à ladite pression de remplissage dudit gaz non condensable; et ledit réfrigérant auxiliaire (25) ayant, à des températures supérieures à ladite température d'intervention (T3) prédéterminée, une pression de vapeur supérieure à ladite pression de remplissage dudit gaz non condensable.

11. Un réacteur selon la revendication 10, **caractérisé en ce que** ledit au moins un échangeur de chaleur auxiliaire (24) est placé le long dudit circuit de refroidissement primaire (13) et parallèlement audit au moins un échangeur de chaleur principal (11) et audit conduit auxiliaire (40); ledit au moins un échangeur de chaleur auxiliaire (24) comprenant, pour ledit réfrigérant primaire (5), une entrée (58) sensiblement au même niveau que ledit niveau de sortie (52) dudit réfrigérant primaire (5) venant dudit au moins un échangeur de chaleur principal (11).

12. Un réacteur selon la revendication 11, **caractérisé en ce que** ledit au moins un échangeur de chaleur auxiliaire est placé à l'intérieur dudit conduit à écoulement descendant (33) et est immergé dans ledit réfrigérant primaire (5); ladite entrée pour ledit réfrigérant primaire (5) étant définie par une extrémité inférieure (58) d'une douille conductrice (57) entourant, à une distance radiale prédéterminée, ledit au moins un échangeur de chaleur auxiliaire (24).

13. Un réacteur selon l'une des revendications 10 à 12, **caractérisé en ce que** ledit au moins un échangeur de chaleur externe (26) comprend un collecteur-distributeur inférieur (61), un collecteur-distributeur supérieur (62) et un banc de tubes conformés (63), reliant lesdits collecteurs-distributeurs inférieur et supérieur (61, 62); ledit banc de tubes conformés (63) étant logé dans un conduit (64) ouvert pour le passage d'un flux (65) d'air atmosphérique à circulation naturelle.

14. Un réacteur selon la revendication 13, **caractérisé en ce que** lesdits collecteurs-distributeurs inférieur et supérieur (61, 62) sont sensiblement cylindriques et agencés horizontalement et parallèlement l'un à l'autre; lesdits tubes (63) conformés étant des tubes ailetés, façonnés en forme de U, et ayant chacun des raccords d'extrémité pour la liaison à une partie supérieure dudit collecteur-distributeur inférieur (61) et à une partie inférieure dudit collecteur-distributeur supérieur (62); une partie inférieure (66) dudit collecteur-distributeur (61) ayant, à des extrémités longitudinales (67, 68) opposées, un premier et un deuxième tube (69, 70) pour la liaison audit au moins un échangeur de chaleur auxiliaire (24).

15. Un réacteur selon la revendication 14, **caractérisé en ce que** ledit réfrigérant auxiliaire (25) dans ledit circuit de refroidissement auxiliaire (23) est en une quantité telle que, à des températures inférieures à ladite température d'intervention prédéterminée, le réfrigérant auxiliaire remplit partiellement ledit collecteur-distributeur inférieur (61) dudit au moins un échangeur de chaleur externe (26) jusqu'à un niveau (73) prédéterminé; ledit collecteur-distributeur supérieur (62) et les tubes (63) conformés étant remplis dudit gaz non condensable à ladite pression de remplissage prédéterminée.

16. Un réacteur selon l'une des revendications 9 à 15, **caractérisé en ce que** ledit au moins un échangeur de chaleur principal (11) et/ou ledit au moins un échangeur de chaleur auxiliaire (24) sont des échangeurs de chaleur (81) comprenant un faisceau de tubes d'échange thermique (82) du type à baïonnette, immergés sensiblement verticalement dans ledit réfrigérant primaire (5); des tubes intérieurs (92) respectifs étant insérés concentriquement et co-axialement à l'intérieur desdits tubes d'échange thermique (82) et ayant un diamètre extérieur (D2) inférieur à un diamètre intérieur (D1) desdits tubes d'échange thermique (82).

17. Un réacteur selon la revendication 16, **caractérisé en ce que** lesdits tubes d'échange thermique (82) sont connectés, à des premières extrémités supérieures (88) ouvertes, respectives, à une première plaque tubulaire (89), et sont fermés par des bouchons (91) respectifs en partie inférieure, à des deuxièmes extrémités (90) libres respectives, opposées auxdites premières extrémités (88), connectées à la première plaque tubulaire (89); lesdits tubes intérieurs (92) étant ouverts à la fois à des extrémités supérieures (93) respectives et à des extrémités inférieures (95) respectives, placées à une distance prédéterminée desdits bouchons (92) desdits tubes d'échange thermique (82); lesdits tubes intérieurs (92) faisant saillie axialement par lesdites extrémités supérieures respectives (93) desdites premières extrémités (88) desdits tubes d'échange thermique (82), et étant connectés par lesdites extrémités supérieures (93) respectives à une deuxième plaque tubulaire (94), située au-dessus et déplaçable axialement par rapport à ladite première plaque tubulaire (89); lesdits tubes intérieurs (92) étant déplaçables axialement par rapport auxdits tubes d'échange thermique (82).

18. Un réacteur selon la revendication 17, **caractérisé en ce que** ladite deuxième plaque tubulaire (94), à laquelle lesdits tubes intérieurs (92) sont connectés, est reliée, par un premier raccord (96), à un conduit d'entrée (97); ladite première plaque tubulaire (89), à laquelle lesdits tubes d'échange thermique (82) sont connectés, étant reliée par un deuxième raccord (99) à un conduit de sortie (100) sensiblement concentrique à, et radialement extérieur par rapport audit conduit d'entrée (97); ledit premier raccord (96) étant placé axialement, sensiblement en face dudit deuxième raccord (99), à une distance axiale (L) prédéterminée; ledit conduit intérieur (97) et ledit conduit de sortie (100) étant susceptibles de coulisser axialement, l'un par rapport à l'autre, d'une seule pièce avec ladite deuxième plaque tubulaire (94) et ladite première plaque tubulaire (89), respectivement.

19. Un réacteur selon la revendication 18, **caractérisé en ce que** lesdits tubes intérieurs (92) comprennent, sur des surfaces latérales (110) radialement extérieures, respectives, des ailettes (111) hélicoïdales, respectives, d'une hauteur (H) juste légèrement inférieure à la moitié de la différence entre ledit diamètre intérieur (D1) desdits tubes d'échange thermique (82) et ledit diamètre extérieur (D2) desdits tubes intérieurs (92), c'est-à-dire: H - 1/2 (D1-D2) ; lesdites ailettes (111) verticales s'enroulant autour desdits tubes intérieurs (92) avec un pas inférieur à ladite distance axiale (L) entre ledit premier raccord (96) et ledit deuxième raccord (99).

20. Un réacteur selon l'une quelconque des revendications précédentes, **caractérisé en ce que** ledit fluide à faible pression de vapeur est une huile synthétique ayant une faible pression de vapeur à des températures inférieures à environ 350 à 400° C.

Fig.1

Fig.2

Fig.3

Fig.7

Fig.4

Fig.5

Fig.8

Fig.6

**EP 1 078 376 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0047698 A
- IT TO96A001081